# EUROPÄISCHE PATENTSCHRIFT

(11) **EP 2 096 010 B1**
(45) Veröffentlichungstag und Bekanntmachung des Hinweises auf die Patenterteilung: **06.06.2012**
(21) Anmeldenummer: 09001738.5
(22) Anmeldetag: 07.02.2009
(51) Int. Cl.: B60T 13/04, B60T 17/18, B66F 9/24

(54) **Bremssystem für ein Flurförderzeug**
Braking system for an industrial truck
Système de freinage pour un chariot de manutention

(30) Priorität: 28.02.2008 DE 102008011719
(43) Veröffentlichungstag der Anmeldung: 02.09.2009
(73) Patentinhaber: Jungheinrich Aktiengesellschaft, 22047 Hamburg (DE)
(72) Erfinder: Glaeske, Jens, 22844 Norderstedt (DE); Steiner, Michael, 22965 Todendorf (DE); Von Thienen, Niels, 22305 Hamburg (DE); Wiegandt, Jens, 01917 Kamenz (DE); Zoske, Manfred, 23826 Bark (DE)
(74) Vertreter: Hauck Patent- und Rechtsanwälte

(56) Entgegenhaltungen:
- DE-A1- 10 251 025
- DE-A1- 19 510 716
- DE-A1-102005 017 734

## Beschreibung

Die Erfindung bezieht sich auf ein Bremssystem für ein Flurförderzeug nach Patentanspruch 1.

Die Erfindung bezieht sich auf das Bremssystem für ein batteriebetriebenes Flurförderzeug, das überdies eine elektrische Lenksteuerung aufweist und einen elektrischen Fahrmotor. Die einzelnen Funktionen des Flurförderzeugs werden von einer Fahrzeugsteuerung auf elektronischer Basis gesteuert.

Bei einer elektrischen Lenksteuerung erzeugt ein Lenkgeber, beispielsweise ein Potenziometer oder ein anderer Winkelgeber ein Soll-Signal, das auf eine Verstellvorrichtung für das gelenkte Rad gegeben wird. Bei einer Lenkregelung wird von einem geeigneten Sensor der Lenkwinkel des belenkten Rades gemessen und auf den Regler gegeben, der nach Maßgabe des Vergleiches von Soll- und Istwert den Lenkwinkel auf den Sollwert fährt.

Eine elektrische Lenksteuerung muss naturgemäß überwacht werden, damit bei Ausfall oder Auftreten von Fehlern keine Gefahr für den Fahrer bzw. das Fahrzeug besteht. Es ist daher bekannt, bei Auftreten eines solchen Zustandes ein Fehlersignal zu erzeugen, das dazu führt, dass eine Notstopp- oder Fail-safebremse aktiviert wird, die das Fahrzeug zum Stillstand bringt. Eine derartige Bremse ist üblicherweise eine elektromagnetisch belüftbare Federspeicherbremse. Wird die Bremse bestromt, werden die Bremsscheiben außer Eingriff gebracht. Bei Wegfall des Stroms drücken Federn die Bremsscheiben gegeneinander und bewirken eine entsprechende Abbremsung.

Es ist auch bekannt, derartige Notstopp-Bremsen, die üblicherweise auf der Welle des Fahrmotors angeordnet sind, auch als Parkbremse oder zum Halten des Fahrzeugs am Hang zu benutzen. Werden etwa die Betriebsfunktionen des Fahrzeugs abgeschaltet, wird eine derartige Bremse automatisch aktiviert. Außerdem ist es dem Bediener möglich, durch Erzeugung eines entsprechenden Bremssignals die Notstopp- oder Failsafebremse zu aktivieren, wenn er verhindern will, dass das Fahrzeug auf bei einem Gefälle sich selbsttätig in Bewegung setzt.

Bei der bekannten Lenksteuerung wird im Fehlerfall ein Relais, das in der Verbindungsleitung zwischen der Fahrzeugbatterie und der Notstopp-Bremse angeordnet ist, sofort geöffnet. Je nach Auslegung der Federn der Bremse kommt es zu einer mehr oder weniger starken Verzögerung. Ist die Notstopp-Bremse so ausgelegt, dass es das Fahrzeug auch auf steilen Rampen hält, sind die Federn der Notstopp-Bremse entsprechend steif aufzulegen. Dies führt bei Aktivierung der Notstopp-Bremse zu einer starken Abbremsung des Fahrzeugs. Die starke Abbremsung kann eine Destabilisierung des Fahrzeugs zur Folge haben und somit oder auch allein durch starke Verzögerung zu einer Verletzung des Bedieners führen. Neben der Gefährdung des Fahrers kann das Fahrzeug bei blockierendem Rad auch aus der Spur geraten.

Aus DE 102 51 025 A1 ist eine Bremsvorrichtung für ein Flurförderzeug bekannt geworden mit einem hydraulischen Bremszylinder, der mit einem Betätigungsorgan gekoppelt ist und über eine Bremsleitung mit mindestens einer einem Rad des Flurförderzeugs zugeordneten hydraulischen Bremse verbunden ist. Mit der hydraulischen Bremsleitung ist ein weiterer hydraulischer Bremszylinder verbunden, wobei der zweite Bremszylinder mit einem Elektromagneten gekoppelt ist. Es ist eine Notstoppvorrichtung vorgesehen, die ein Bremssignal auf den Elektromagneten gibt zur Betätigung des zweiten Bremszylinders. Aus DE 195 10 716 A1 ist eine Notstopp- und/oder Handbremsvorrichtung für Flurförderzeuge bekannt geworden mit einem Kraftglied, das über ein Seil mit einer Trommelbremse verbunden ist und bei Betätigung eine Bremsfeder verstellt, über die bei nicht betätigtem Kraftglied eine Zugkraft auf das Seil aufgebracht wird. Das Kraftglied wird durch einen Auslöser betätigt. Das Kraftglied ist ein Hubmagnet, dessen Anker am Seil angreift und von der Feder in Zugrichtung des Seils vorgespannt ist. Der Hubanker ist mit einer Haftplatte eines Haftmagneten verbunden, wobei der elektrisch betriebene Haftmagnet so bemessen ist, dass die Haftkraft bei aktiviertem Haftmagneten ausreicht, bei der durch den Hubanker gelüfteter Bremse der gespannten Feder entgegenzuwirken. Eine Steuervorrichtung schaltet den Hubanker aus, wenn der Haftmagnet die Haltefunktion übernommen hat. Aus DE 10 2005 017 734 A1 ist ein Flurförderzeug bekannt geworden, das zumindest ein Energiespeicher, eine übergeordnete Steuerung, mindestens zwei elektrische Antriebe, mindestens ein lenkbares Antriebsrad sowie eine elektronische Steuerung für mindestens zwei elektrische Antriebe aufweist. Die elektrische Steuerung setzt sich dabei aus mindestens einer Signalelektronik und mindestens einer Leistungselektronik zusammen. Es ist nur eine einzige einheitliche Schnittstelle vorgesehen, über welche die elektronische Steuerung der mindestens zwei elektrischen Antriebe angesteuert wird. Dies wird dadurch ermöglicht, dass die Steuer- und Signalelektroniken der mindestens zwei elektrischen Antriebe räumlich und funktional in einer Einheit zusammengefasst sind.

Der Erfindung liegt die Aufgabe zugrunde, ein Bremssystem für ein Flurförderzeug zu schaffen, das im Fehlerfall der Lenksteuerung die Wirkung einer Notstopp-Bremse abschwächt.

Diese Aufgabe wird durch die Merkmale des Patentanspruches 1 gelöst.

Bei dem erfindungsgemäßen Bremssystem ist mit dem ersten Schalter ein weiterer Schalter in Reihe geschaltet, der von einem PWM-Steller der Fahrzeugsteuerung betätigbar ist. PWM ist bekanntlich die Abkürzung für eine Pulsweitenmodulation der Steuerpulse. Sie ist für derartige Steuerungen allgemein gebräuchlich. Zwischen der Lenksteuerung und der Fahrzeugsteuerung ist außerdem eine Steuerleitung geschaltet derart, dass bei Auftreten eines Brems- oder Fehlersignals in der Lenksteuerung die Schalter nach Maßgabe des Takts des PWM-Stellers geschaltet werden.

Die Fahrzeugsteuerung kann über den PWM-Steller die Notstopp-Bremse dosiert betreiben. Durch Taktung der Notstopp-Bremse wird die Bremswirkung auf ein beträchtliches Maß verringert, ohne dass die Anforderungen an die Sicherheitsstruktur beeinträchtigt sind.

Im Fehlerfall erteilt z. B. die Lenksteuerung, z. B: über einen Can-Bus den Befehl, die Bremse in einer langsamen Taktung, von z. B. 200 ms- ein- und auszuschalten. In Zeiten, in denen die Bremse durch den PWM-Steller stromlos geschaltet wird, öffnet auch der erste Schalter. Durch das Schalten dieses Schalters im stromlosen Zustand wird die Lebensdauer des Kontakts erheblich verlängert. Wird, aus welchem Grunde immer, die Ansteuerung des zweiten Schalters über den PWM-Steller in der geforderten Taktung nicht vorgenommen, dann ist durch Öffnung des ersten Schalters, die bei einem Fehlersignal aus der elektrischen Lenkung immer erfolgt, die Aktivierung der Bremse sichergestellt.

Durch die Taktung der Notstopp-Bremse ist ihre Wirkung in weiten Bereichen auf verschiedene Einsatzfälle, Geschwindigkeitsbereiche und Gewichtsklassen anpassbar. Nach dem Stand der Technik ist hingegen für jede Fahrzeugbaureihe eine Bremse mit einem vorgegebenen Bremsmoment vorgesehen.

Das Bremssignal eines Bremsgebers, beispielsweise für eine Hand- oder Parkbremse oder auch eine Zusatzbremse wird nach einer Ausgestaltung der Erfindung auf die Fahrzeugsteuerung gegeben, und der PWM-Steller taktet den zweiten Schalter nach Maßgabe des Bremssignals. Daher ist die Notstopp-Bremse auf diese Weise wie eine übliche Betriebsbremse betätigbar.

In einer weiteren Ausgestaltung der Erfindung ist in der Fahrzeugsteuerung ein Zeitglied vorgesehen derart, dass nach Ablauf einer vorgegebenen Zeit der erste oder zweite Schalter ständig offen bleibt. Hier wird dem Umstand Rechnung getragen, dass eine getaktete Abbremsung naturgemäß nur bei sich bewegendem Fahrzeug erforderlich ist. Kommt das Fahrzeug zum Stillstand, ist die Notstopp-Bremse ständig aktiviert.

Alternativ kann ein Sensor den Stillstand des Flurförderzeugs erfassen und ein Stillstandsignal auf die Fahrzeugsteuerung geben, um den ersten oder zweiten Schalter offen zu halten. Es versteht sich, dass dies nur geschieht, wenn zuvor ein Fehlersignal erzeugt worden ist. Sonst würde die Notstopp-Bremse bei jedem Halt des Fahrzeugs aktiviert werden.

Nach einer weiteren Ausgestaltung der Erfindung kann der Takt des PWM-Stellers von der Geschwindigkeit des Fahrzeugs, von der aufgenommenen Last, vom Gesamtgewicht des Fahrzeugs, von der Steigung oder dem Gefälle des befahrenen Untergrundes und dergleichen abhängig gemacht sein. Beim Einsatz als Betriebsbremse kann der Takt auch von der Größe des Bremssignals abhängig gemacht werden.

Nach einer weiteren Ausgestaltung der Erfindung gibt der Bremsgeber ein Bremssignal auf die Fahrzeugsteuerung die ihrerseits die Ansteuerung des Fahrmotors steuert bzw. regelt in der Weise, dass der Fahrmotor in den generatorischen Betrieb (generatorische Bremsen) übergeht. Es ist möglich, auf diese Weise ein erhebliches Bremsmoment zu erzeugen, das im Normalfall ausreicht, das gewünschte Bremsmoment aufzubringen Es kann nach einer weiteren Ausgestaltung der Erfindung so ausgelegt sein, dass es die Bremskraft einer Notstopp-Bremse bei einer Taktung durch den PWM-Steller überlagert und übertrifft, wodurch die Notstopp-Bremse auch bei Stillstand des Fahrzeugs zur Einwirkung gelangt. Auch hier ist entscheidend, dass zuvor ein Signal zur Betätigung der Notstopp-Bremse erzeugt worden ist, weil ansonsten bei einer üblichen Betriebsbremse mit dem Fahrmotor im Stillstand die Notstopp-Bremse zum Einsatz gelangen würde.

Ein Ausführungsbeispiel der Erfindung wird nachfolgend anhand von Zeichnungen näher erläutert.
- Fig. 1: zeigt perspektivisch ein Vierrad-Flurförderzeug.
- Fig. 2: zeigt ein einfaches Schaltbild eines Bremssystems für das Flurförderzeug nach Figur 1.

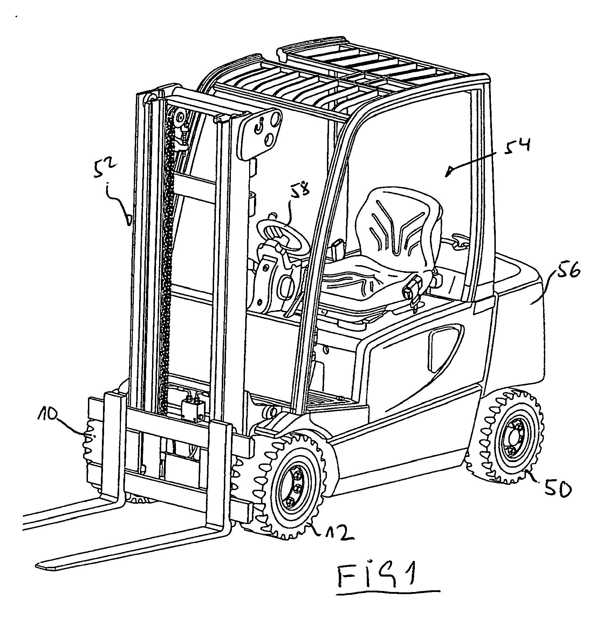

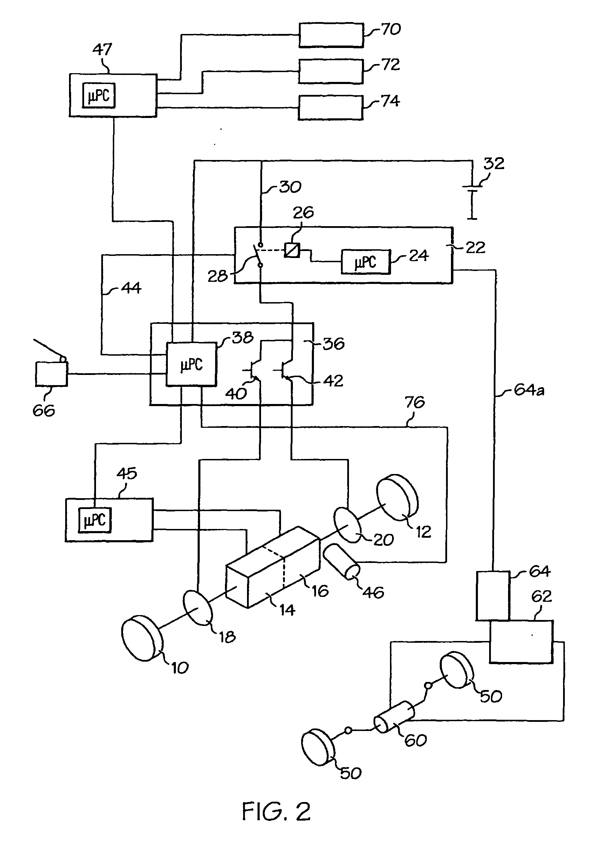

Der in Figur 1 dargestellte Gegengewichtsstapler, der ein Vierradfahrzeug ist, soll im Einzelnen nicht näher beschrieben werden. Man erkennt eines von zwei hinteren gelenkten Rädern 50 und zwei vordere angetriebene Räder 10, 12. Das in Figur 1 dargestellte Fahrzeug weist außerdem ein Hubgerüst 52 auf, eine Fahrerkabine 54 und ein Gegengewicht 56 am hinteren Ende sowie ein Lenkrad 58 in der Fahrerkabine. Die Steuerung der einzelnen Funktionen des Flurförderzeugs erfolgt auf elektrischem Wege, insbesondere die Fahrsteuerung und die Lenksteuerung. Die einzelnen Steuervorgänge, insbesondere ein geeignetes Bremssystem, werden anhand von Figur 2 erläutert.

In Figur 2 werden die angetriebenen Räder 10, 12 durch jeweils einen Fahrmotor 14 bzw. 16 angetrieben. Die Steuerung für die Fahrmotoren ist durch einen Block 45 dargestellt.

Auf den Wellen der Fahrmotoren 14, 16 sitzen Notstopp- bzw. Failsafebremsen 18 bzw. 20. Sie sind als elektromagnetisch lüftbare Federspeicherbremsen ausgeführt. Bei nicht bestromten Elektromagneten sind die Bremsen im Eingriff, wobei das Bremsmoment durch die Auslegung der Federn vorgegeben ist. Bei der Bestromung wird die Bremse gelüftet, das heißt z. B. eine Bremsscheibe gegen den Druck der Federn in eine Freigabestellung gebracht.

Das nicht gezeigte Flurförderzeug besitzt eine elektrische Lenkung. Zu diesem Zweck ist der Lenkgeber (Lenkrad 58) mit einem Winkelgeber (nicht gezeigt) gekoppelt, der elektrische Signale auf eine Lenksteuerung 22 gibt. Die Lenksteuerung verstellt dabei zumindest ein gelenktes Rad 50 des Flurförderzeugs. Die Lenksteuerung enthält einen Mikroprozessor 24. Die elektrische Lenksteuerung 22 enthält auch ein Relais 26, dessen Kontakt 28 in einer Leitung 30 geschaltet ist, die mit einer Batterie 32 in Verbindung steht. Die Batterie 32 dient zur Versorgung aller elektrisch bzw. elektronisch betriebenen Komponenten des Flurförderzeugs. Das Relais 26 wird vom Mikroprozessor 24 angesteuert.

Die Lenkung der gelenkten Räder 50 wird mittels eines Hydraulikzylinders 60 bewerkstelligt, der von einer Lenkpumpe 62 versorgt wird. Die Lenkpumpe wird durch einen Lenkmotor 64 angetrieben, die von der Lenksteuerung 22 über eine Leitung 64a angesteuert wird.

Es ist außerdem eine übergeordnete Fahrzeugsteuerung 36 angedeutet, die einen Mikroprozessor 38 enthält, der alle übrigen Funktionen des Fahrzeugs steuert bzw. überwacht. Dies ist allgemein bekannt und soll nicht weiter im Einzelnen erörtert werden. Die Fahrzeugsteuerung 36 enthält auch zwei elektronische Leistungsschalter 40, 42, die vom Mikroprozessor 38 gesteuert werden. Der Mikroprozessor 38 ist über einen Can-Bus 44 mit der Lenksteuerung 22 verbunden. Die parallel geschalteten Leistungsschalter 40, 42 liegen in Reihe mit dem Schaltkontakt 28 des Relais 26. Die Leitung 30 führt zu den Notstopp- bzw. Failsafebremsen 18, 20 zur Bestromung der Elektromagneten der Bremsen.

Zur Lenksteuerung 22 gehört auch eine Überwachung der Lenksteuerung auf ihre Funktion. Ist diese gestört, muss vermieden werden, dass das Flurförderzeug weiter fahren kann. Zu diesem Zweck werden dann die Notstopp-Bremsen 18 bzw. 20 aktiviert. Dies geschieht durch Unterbrechung der Bestromung der Bremsen 18, 20. Der Mikroprozessor 24 öffnet in diesem Fall über das Relais 26 den Kontakt 28, sodass die Bremsen 18, 20 stromlos werden.

Da ein plötzliches Stromloswerden die Bremsen 18, 20 in einem maximalen Bremsmoment resultiert, bedingt dies ein abruptes Abbremsen des Flurförderzeugs, was unerwünschte Folgen haben kann. Mit Hilfe des Mikroprozessors 38 und eines nicht gezeigten PWM-Stellers in der Fahrzeugsteuerung 36 erfolgt eine Taktung der Halbleiterschalter 40, 42. Mit der Betätigung bzw. Taktung der Schalter 40, 42 findet über den Can-Bus 40 parallel ein Öffnen und Schließen des Kontaktes 28 statt. Sobald also in der Lenksteuerung 32 ein Fehler festgestellt wird, der eine Aktivierung der Bremsen 18, 20 nach sich zieht, wird über den Can-Bus 44 der Mikroprozessor 38 angesteuert, damit er über den PWM-Steller die Halbleiterschalter 40, 42 taktet, das heißt kurzzeitig öffnet und schließt. Im gleichen Takt wird der Kontakt 28 betätigt. Auf diese Weise wird ein reduziertes Bremsmoment an den Bremsen 18, 20 aufgebaut und das Fahrzeug weniger stark verzögert als dies der Fall wäre, wenn die Notstopp-Bremse unter maximalem Bremsmoment wirken würde. Ist das Fahrzeug zum Stillstand gekommen, ist eine weitere Taktung der Schalter 28, 40, 42 nicht mehr nötig, und diese können geöffnet bleiben. Es reicht aus, wenn nur Kontakt 28 geöffnet bleibt. Dieser sorgt auch dafür, dass bei Nicht-Funktion der Taktung der Schalter 40, 42 ein Eingriff der Bremsen 18, 20 im Notfall gewährleistet ist.

Mit der getakteten Aktivierung der Bremsen 18, 20 ist es auch möglich, diese als Betriebsbremsen einzusetzen, beispielsweise dann, wenn die herkömmliche Betriebsbremse, die hier nicht dargestellt ist, nicht ausreicht, um das nötige Bremsmoment aufzubringen.

Die Bremsen 18, 20 können auch als Handbremsen oder als Parkbremsen verwendet werden, wobei sie auch getaktet zum Eingriff gebracht werden können. Ein Bremsgeber, z.B. ein Bremspedal, ist in Figur 2 bei 66 dargestellt. Er ist mit dem Mikroprozessor 38 der Fahrzeugsteuerung 36 verbunden. In diesem erfolgt, wie beschrieben, die Taktung der Bremsen 18, 20. Dies kann in Abhängigkeit von verschiedenen Betriebsbedingungen erfolgen. In Figur 2 sind drei Sensoren dargestellt. Ein Sensor 70 spricht auf die Last des Flurförderzeugs an. Ein Sensor 72 spricht etwa auf die Steigerung bzw. das Gefälle des befahrenen Untergrunds an. Ein Sensor 74 misst zum Beispiel die Fahrzeuggeschwindigkeit. Die Sensoren 70 bis 74 sind mit einem Mikroprozessor 47 verbunden, der seinerseits mit dem Mikroprozessor 38 für die übergeordnete Fahrzeugsteuerung verbunden ist.

Im normalen Bremsfall, d.h. bei Betriebsbremsung, verursacht das Signal des Bremsgebers 66 die Umsteuerung der Fahrmotoren 14, 16 in den generatorischen Betrieb (Motorbremse). Bei Abschaltung der Fahrzeugsteuerung werden die Failsafe-Bremsen 18, 20 ebenfalls aktiviert. Unter Umständen werden die Bremsen 18, 20 bei Motorbremsung ergänzend hinzugezogen. Auch in diesem Fall erfolgt, wie oben beschrieben, eine Taktierung der Bremsen, damit sie nicht mit vollem Bremsmoment wirksam werden.

Die Taktung der Bremsen 18, 20 kann somit in Abhängigkeit von unterschiedlichen Parametern erfolgen, beispielsweise abhängig von der Geschwindigkeit des Fahrzeugs, von der Beladung des Fahrzeugs, von der Höhe der Beladung, von dem Gesamtgewicht des Fahrzeugs usw. gemacht werden. Es ist auch möglich, über einen Sensor 46, der etwa auf die Antriebswelle für die angetriebenen Räder 10, 12 anspricht, den Stillstand des Fahrzeugs zu erfassen, um der Lenksteuerung 22 bzw. der Fahrzeugsteuerung (Fahrzeugmaster) ein Signal zu geben, das die Taktung beendet und mindestens einen Schalter in der Leitung 30 offen hält. Der Sensor 46 ist deshalb über eine Leitung 76 mit der Lenksteuerung 36 bzw. dem Prozessor 38 verbunden. Hierbei muss sichergestellt sein, dass diese Steuerung nur dann zum Einsatz kommt, wenn zuvor ein Fehler in der Lenksteuerung 22 festgestellt worden ist, da sonst bei jedem Halt des Flurförderzeugs die Bremsen 18, 20 aktiviert werden würden.

## Patentansprüche

1. Bremssystem für ein Flurförderzeug, das mindestens einen Fahrmotor (14, 16) für mindestens ein angetriebenes Rad (10, 12), eine elektrische Lenksteuerung (22) für mindestens ein gelenktes Rad (50), eine Betriebsbremse mit einem ein Bremssignal erzeugenden Bremsgeber und eine elektromagnetisch lüftbare Federspeicherbremse (18, 20) als Notstopp-Bremse aufweist, die unter anderem aktivierbar ist, wenn in der Lenksteuerung (22) ein Fehlersignal oder anderweitig ein Bremssignal erzeugt wird, das ferner eine übergeordnete Fahrzeugsteuerung (36) für verschiedene Funktionen des Flurförderzeugs und eine Batterie (32) zur Versorgung der einzelnen elektrischen Verbraucher aufweist, wobei die Lenksteuerung (22) bei einem Fehlersignal einen ersten Schalter (28) betätigt, der die elektrische Verbindung zwischen der Batterie (32) und der Notstopp-Bremse unterbricht, **dadurch gekennzeichnet, dass** ein weiterer Schalter (40, 42) in Reihe mit dem ersten Schalter (28) geschaltet ist, der von einem PWM-Steller der Fahrzeugsteuerung (36) betätigbar ist und zwischen der Lenksteuerung (22) und der Fahrzeugsteuerung (36) eine Steuerleitung (44) geschaltet ist derart, dass bei Auftreten eines Fehlersignals oder eines Bremssignals beide Schalter (28, 40, 42) nach Maßgabe des Takts des PWM-Stellers geschaltet werden.

2. Bremssystem nach Anspruch 1, **dadurch gekennzeichnet, dass** das Bremssignal des Bremsgebers über die übergeordnete Fahrsteuerung (36) auf eine Fahrsteuerung (45) gegeben wird und der PWM-Steller nach Maßgabe des Bremssignals den zweiten Schalter (40, 42) taktet.

3. Bremssystem nach Anspruch 1 oder 2, **dadurch gekennzeichnet, dass** in der übergeordneten Fahrzeugsteuerung (36) ein Zeitglied vorgesehen ist derart, dass nach Ablauf einer vorgegebenen Zeit der erste und/oder zweite Schalter (28, 40, 42) ständig offengehalten ist.

4. Bremssystem nach einem der Ansprüche 1 bis 3, **dadurch gekennzeichnet, dass** ein Sensor (46) den Stillstand des Flurförderzeugs erfasst und ein Stillstandssignal auf die übergeordnete Fahrzeugsteuerung (36) gibt und erster und/oder zweiter Schalter (28, 40, 42) bei einem Stillstandssignal offengehalten wird, wenn zuvor ein Fehlersignal erzeugt worden ist.

5. Bremssystem nach einem der Ansprüche 1 bis 4, **dadurch gekennzeichnet, dass** der Takt des PWM-Stellers von der Geschwindigkeit, dem Gewicht des Fahrzeugs, dem Gewicht der aufgenommenen Last, von der Steigung bzw. dem Gefälle des befahrenen Untergrundes usw. abhängig ist, wobei diese Betriebsbedingungen von Sensoren (70 bis 74) detektiert werden, die mit der Fahrzeugsteuerung verbunden sind.

6. Bremssystem nach einem der Ansprüche 1 bis 5, **dadurch gekennzeichnet, dass** ein Bremsgeber ein Bremssignal auf die Fahrzeugsteuerung (36) gibt und die Fahrzeugsteuerung den Fahrmotor (14, 16) nach Maßgabe des Bremssignals generatorisch bremst.

7. Bremssystem nach Anspruch 6, **dadurch gekennzeichnet, dass** die generatorische Bremskraft so ausgelegt ist, dass diese bei Auftreten eines Fehlersignals die durch Taktung des zweiten Schalters (40, 42) reduzierte Bremskraft der Notstopp-Bremse (18, 20) zumindest vorübergehend übersteigt, bis das Fahrzeug zum Stillstand gekommen ist.

## Claims

1. A braking system for a floor conveyor, which features at least one travel motor (14, 16) for at least one driven wheel (10, 12), an electric steering control (22) for at least one steered wheel (50), a service brake with a braking transmitter generating a braking signal and an electro-magnetically releasable spring brake (18, 20) as an emergency stop brake, which is amongst others actuable when an error signal is generated in the steering control (22) or a braking signal otherwise, which further features a superordinated vehicle control (36) for various functions of the floor conveyor and a battery (32) for supplying the individual electric consumers, wherein the steering control (22) actuates a first switch (28) at an error signal, wherein the first switch (28) cuts off the electric connection between the battery (32) and the emergency stop brake, **characterised in that** an additional switch (40, 42) is connected in series with the first switch (28) and is actuable by a PWM actuator of the vehicle control (36), and that a control line (44) is connected between the steering control (22) and the vehicle control (36), such that both switches (28, 40, 42) are switched according to the clock of the PWM actuator when an error signal or a braking signal occurs.

2. A braking system according to claim 1, **characterised in that** the braking signal of the braking transmitter is transmitted to a travel control (45) via the superordinated vehicle control (36), and the PWM actuator clocks the second switch (40, 42) in accordance with the braking signal.

3. A braking system according to claim 1 or 2, **characterised in that** a timer is provided in the superordinated vehicle control (36), such that after the expiry of a preset period of time, the first and/or the second switch (28, 40, 42) are permanently held open.

4. A braking system according to any one of claims 1 to 3, **characterised in that** a sensor (42) detects the standstill of the floor conveyor and transmits a standstill signal to the superordinated vehicle control (36), and that the first and the second switch (28, 40, 42) are held open at a standstill signal when an error signal has been generated before.

5. A braking system according to any one of claims 1 to 4, **characterised in that** the clock of the PWM actuator depends on the speed, the weight of the vehicle, the weight of the load taken up, on the upward or the downward slope, respectively, of the ground on which is travelled and so on, wherein these conditions of operation are detected by sensors (70 to 74), which are connected to the vehicle control.

6. A braking system according to any one of claims 1 to 5, **characterised in that** a braking transmitter transmits a braking signal to the vehicle control (36), and the vehicle control (36) brakes down the travel motor (14, 16) in a regenerative manner in accordance with the braking signal.

7. A braking system according to claim 6, **characterised in that** the regenerative braking force is dimensioned such that the same exceeds at least temporarily the braking force of the emergency stop brake (18, 20) which is reduced by the clock timing of the second switch (40, 42), until the vehicle has reached standstill.

## Revendications

1. Système de freinage pour un chariot de manutention qui présente au moins un moteur de traction (14, 16) pour au moins une roue entraînée (10, 12), une commande de direction électrique (22) pour au moins une roue dirigée (50), un frein de service avec un transmetteur de freinage générant un signal de freinage et un frein à ressort accumulé pouvant être soulevé par voie électromagnétique (18, 20) en tant que frein d'arrêt d'urgence qui peut être entre autres activé lorsqu'un signal d'erreur ou autrement un signal de freinage est généré dans la commande de direction (22), lequel présente en outre une commande de véhicule maître (36) pour différentes fonctions du chariot de manutention et une batterie (32) pour l'alimentation des consommateurs électriques individuels, dans lequel la commande de direction (22) actionne un premier commutateur (28) lors d'un signal d'erreur qui interrompt la connexion électrique entre la batterie (32) et le frein d'arrêt d'urgence, **caractérisé en ce qu'**un autre commutateur (40, 42) est monté en série avec le premier commutateur (28) qui peut être actionné par un dispositif de réglage de modulation d'impulsions en durée de la commande de véhicule (36) et une ligne de commande (44) est montée entre la commande de direction (22) et la commande de véhicule (36) de telle sorte qu'en cas de survenue d'un signal d'erreur ou d'un signal de freinage, les deux commutateurs (28, 40, 42) sont commutés conformément à la cadence du dispositif de réglage de modulation d'impulsions en durée.

2. Système de freinage selon la revendication 1, **caractérisé en ce que** le signal de freinage du transmetteur de freinage est émis par le biais de la commande de déplacement maître (36) à une commande de déplacement (45) et le dispositif de réglage de modulation d'impulsions en durée cadence le second commutateur (40, 42) conformément au signal de freinage.

3. Système de freinage selon la revendication 1 ou 2, **caractérisé en ce qu'**un système temporisé est prévu dans la commande de véhicule maître (36) de telle sorte qu'après écoulement d'une durée prédéfinie, le premier et/ou second commutateur (28, 40, 42) est maintenu ouvert en permanence.

4. Système de freinage selon l'une quelconque des revendications 1 à 3, **caractérisé en ce qu'**un capteur (46) détecte l'arrêt du chariot de manutention et émet un signal d'arrêt vers la commande de véhicule maître (36) et le premier et/ou second commutateur (28, 40, 42) est maintenu ouvert lors d'un signal d'arrêt lorsqu'au préalable, un signal d'erreur a été généré.

5. Système de freinage selon l'une quelconque des revendications 1 à 4, **caractérisé en ce que** la cadence du dispositif de réglage de modulation d'impulsions en durée dépend de la vitesse, du poids du véhicule, du poids de la charge enregistrée, de la côte ou de la pente du support parcouru, etc., dans lequel ces conditions de fonctionnement sont détectées par des capteurs (70 à 74) qui sont reliés à la commande de véhicule.

6. Système de freinage selon l'une quelconque des revendications 1 à 5, **caractérisé en ce qu'**un transmetteur de freinage émet un signal de freinage vers la commande de véhicule (36) et la commande de véhicule freine le moteur de traction (14, 16) de manière génératrice conformément au signal de freinage.

7. Système de freinage selon la revendication 6, **caractérisé en ce que** la force de freinage génératrice est conçue de sorte que celle-ci dépasse au moins temporairement la force de freinage du frein d'arrêt d'urgence (18, 20) réduite par le cadencement du second commutateur (40, 42) en cas de survenue d'un signal d'erreur jusqu'à ce que le véhicule se soit arrêté.
